# EUROPEAN PATENT SPECIFICATION

(11) **EP 2 239 189 B1**
(45) Date of publication and mention of the grant of the patent: **26.09.2012**
(21) Application number: 09177581.7
(22) Date of filing: 01.12.2009
(51) Int. Cl.: B62K 21/06, B62H 5/06, B62K 21/08

(54) **Bicycle handlebar lock device and method of the same**
Fahrradlenkersperrvorrichtung und Methode
Dispositif de verrouillage de guidon de bicyclette et son procédé

(30) Priority: 07.04.2009 TW 98111553
(43) Date of publication of application: 13.10.2010
(73) Proprietor: Giant Manufacturing Co., Ltd, Taichung Hsien (TW)
(72) Inventor: Lin, Chia-Wei, Taichung County (TW)
(74) Representative: Lang, Christian

(56) References cited:
- DE-C- 949 924
- FR-A- 968 488
- GB-A- 270 808

## Description

### BACKGROUND

### Technical Field

The present disclosure relates to a bicycle steering device. More particular, the present disclosure relates to a bicycle handlebar lock device.

### Description of Related Art

Bicycle is an important transportation tool. The direction control of the bicycle is based on the design of the handlebar stem and the peripheral structure. In order to improve the direction control function of the bicycle, many efforts are invested in the design of the handlebar stem and the peripheral structure.

Generally, the rear wheel of the bicycle is lined with the frame body, and the forward direction of the front wheel and the bicycle can be changed only by controlling the handlebar. In detail, the handlebar drives the aheadset stem and thus drives the front wheel installed on the aheadset stem. Furthermore, the driver keeps the balance of riding by shifting the handlebar to control the gravity center of his own body and the bicycle.

When concerning the design of the bicycle, the handlebar connects the aheadset stem via a handlebar stem, wherein the handlebar stem is provided as a torque to drive the aheadset stem. A variety of handlebars are provided to satisfy different users.

The aheadset stem is driven via the handlebar to control the forward direction of the front wheel, and thus to control the forward direction of the bicycle. The connecting interface between the head tube and the aheadset stem includes a hoop ring and a set of pressing members. The hoop ring female joints the handlebar stem to tie the aheadset stem, and the pressing members are applied to connect the frame body with the aheadset stem. The pressing members include a cover located at the top of the aheadset stem, a leaf located inside the aheadset stem, and a bolt pierces through and locked the cover with the leaf.

The bolt presses and connects the handlebar stem to the bowl of the frame body, and thus to maintain the steadiness of the aheadset stem when the aheadset stem is coaxially rotated inside the head tube of the frame body. The design described above enables the handlebar stem to connect with the aheadset stem at a particular angle by operating the bolt and the hoop ring.

However, when the bicycle is parked, the aheadset stem is swayed randomly due to its own weight. And it sometimes makes the bicycle to fall down. To solve the drawback described above, variety kinds of peripheral structure to lock or direct the aheadset stem are provided.

Although the locking device that locks or directs the aheadset stem prevents the bicycle from fall down when parking, the users often forget to unlock the locking device before riding the bicycle, and thus get hurt when riding the bicycle without unlocking the locking device.

Document DE 949924, which shows the features of the preamble of claim 1, relates to a steering damper for a motorcycle comprising spreading members passing through holes in a steering column which are configured to be pressed against a head tube for damping a relative rotation between the steering column and the head tube.

Starting from this state of the art it is the object of the present invention to provide a bicycle handlebar lock device which is easy to install and which does not lead to instability of the stem.

### SUMMARY

This object is solved by the bicycle handlebar lock device according to claim 1 and the bicycle handlebar lock method according to claim 14. Advantageous improvements of the present invention are described by the corresponding dependent claims.

One further aspect of the disclosure is to provide a bicycle handlebar lock device that is able to release the aheadset stem based on the user's riding behavior.

According to one embodiment of the disclosure, the bicycle handlebar lock device is arranged between the aheadset stem and the head tube. The bicycle handlebar lock device includes a restrain cam set and a cone-shape expanding set. The restrain cam set is pivot installed at the head tube, and the cone-shape expanding set female joints the aheadset stem and is located between the restrain cam set and the aheadset stem.

The cone-shape expanding set female joints the aheadset stem and thus provides a preset static friction force to the aheadset stem. The cam structure of the restrain cam set can be rotated and shifted to make the slide pieces of itself engage or depart with the headset. Therefore, the aheadset stem is restrained when the slide pieces is engaged with the headset, and the aheadset stem is released when the slide pieces is departed from the headset.

Furthermore, the cone-shape expanding set enables the aheadset stem to release the aheadset stem while a rotating force larger than the preset static friction force is applied to rotate the aheadset stem.

The restrain cam set is designed to be cooperated with the headset, the restrain cam set includes a slide piece, an elasticity member, a supporting ring, a knob and a shell.

The shell is mounted on the top of the headset to make the slide piece, the elasticity member, the supporting ring and the knob to be positioned inside the headset. Wherein, the slide piece is restrained so that it can only be moved along the axial direction of the aheadset stem, and the knob is restrained so that it can only be rotated.

The cam part is set inside the knob. The first slide part on the cam part enables the slide piece to be lifted by the pressing force of the elasticity member when the knob is rotated by the rotation of the aheadset stem.

The slide piece of the restrain cam set can be moved along the axial direction of the aheadset stem against the pressing force of the elasticity member. And thus the second teeth located below the slide piece can be engaged with or departed from the first teeth located under the headset. Therefore, the cone-shape expanding set can be applied to lock the aheadset stem or release the aheadset stem.

When the slide piece is engaged with the headset via their teeth, the aheadset stem is restrained by the restrain cam set and can not be rotated unless the applied force is larger than the preset static friction force of the cone-shape expanding set. Contrary, when the slide piece is departed from the headset, the rotation of the aheadset stem drives the restrain cam set to rotate together, and the balls inside the headset is applied to overcome the friction force of the cone-shape expanding set.

The cone-shape expanding set includes a restrain ring, and the restrain ring has a first cone surface and a torsion spring opening located on the first cone surface. The shell has a second cone surface located at the inner side of itself, and the first cone surface touches the second cone surface.

Therefore, the driving behavior of the user makes the user to press the restrain ring. The pressing force and the friction force of the restrain ring generate a slide wedge movement. The slide wedge movement makes the restrain ring contract, and the torsion spring opening is narrowed. Therefore, the restrain ring presses the aheadset stem tightly.

Another aspect of the disclosure is to provide a bicycle handlebar lock method that is able to release the aheadset stem while a rotating force that larger than a preset static friction force is applied to rotate the aheadset stem, the method includes steps as following:

First, arranging the bicycle handlebar lock device between the aheadset stem and the head tube, and pressing the aheadset stem by a preset static friction force.

Second, applying a rotating force to the aheadset stem by the user.

Third, releasing the aheadset stem by the applied rotating force, and thus enabling the aheadset stem to rotate relative to the head tube.

In the steps described above, the disclosure uses the slide wedge movement to generate the pressing force, and using the engagement of the restrain cam set and the headset to lock the aheadset stem. The existence of the restrain cam set, the headset and the cone-shape expanding set enables the user to provide a rotating force to unlock the aheadset stem and thus prevent user from falling down.

### BRIEF DESCRIPTION OF THE DRAWINGS

The invention can be more fully understood by reading the following detailed description of the embodiments, with reference made to the accompanying drawings as follows:
Fig. 1 is an exploded diagram of one embodiment of the disclosure, depicting the bicycle handlebar lock device.
Fig. 2 is a cutaway view of Fig. 1.
Fig. 3 is a part cutaway view of Fig. 1, depicting the unlock status.
Fig. 4 is a part cutaway view of Fig. 1, depicting the lock status.
Fig. 5 is a schematic view of the bicycle handlebar lock device of Fig. 1, depicting the unlock status.
Fig. 6 is a schematic view of the bicycle handlebar lock device of Fig. 1, depicting the lock status.

### DETAILED DESCRIPTION

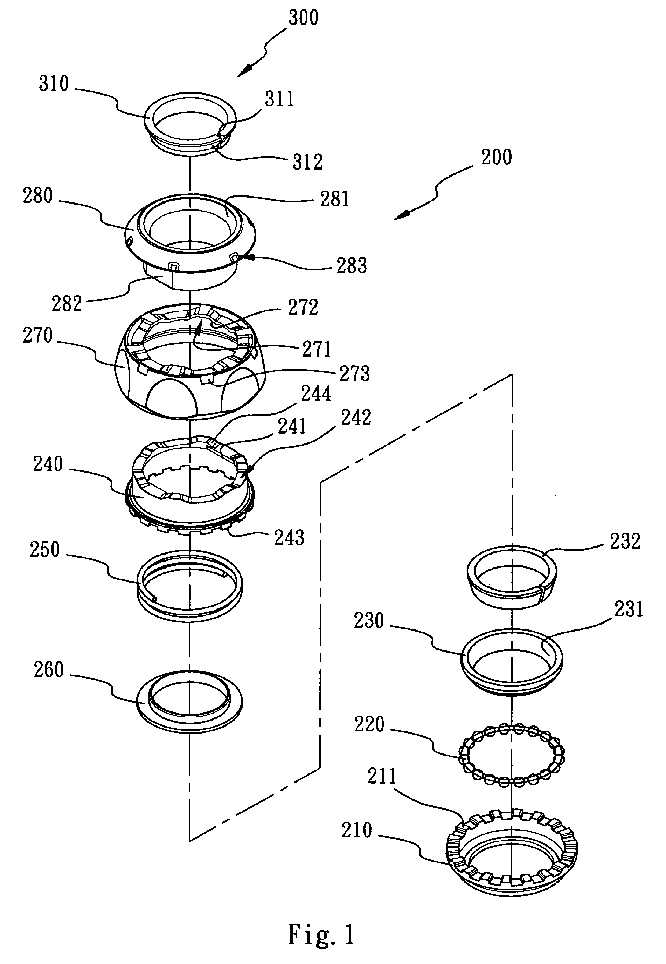

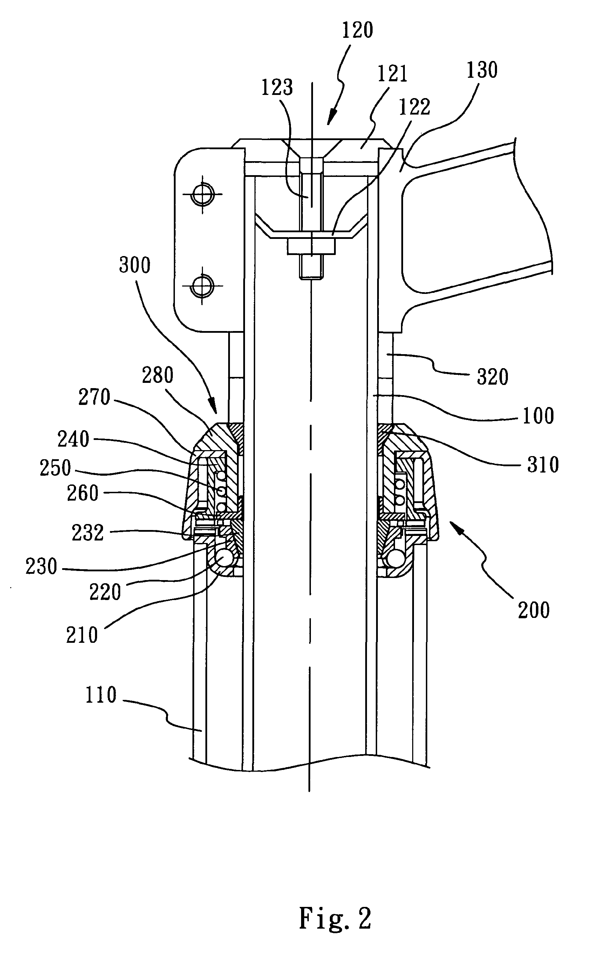

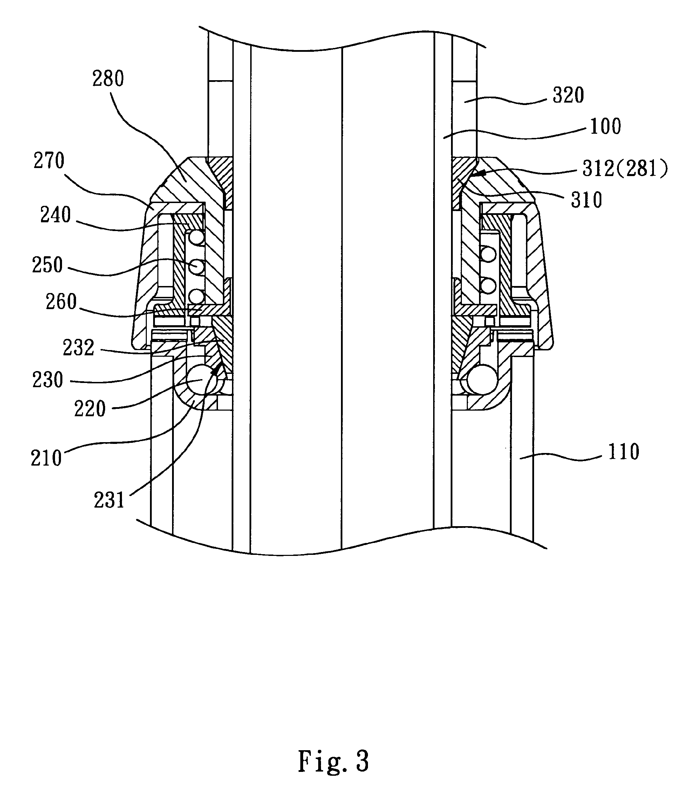

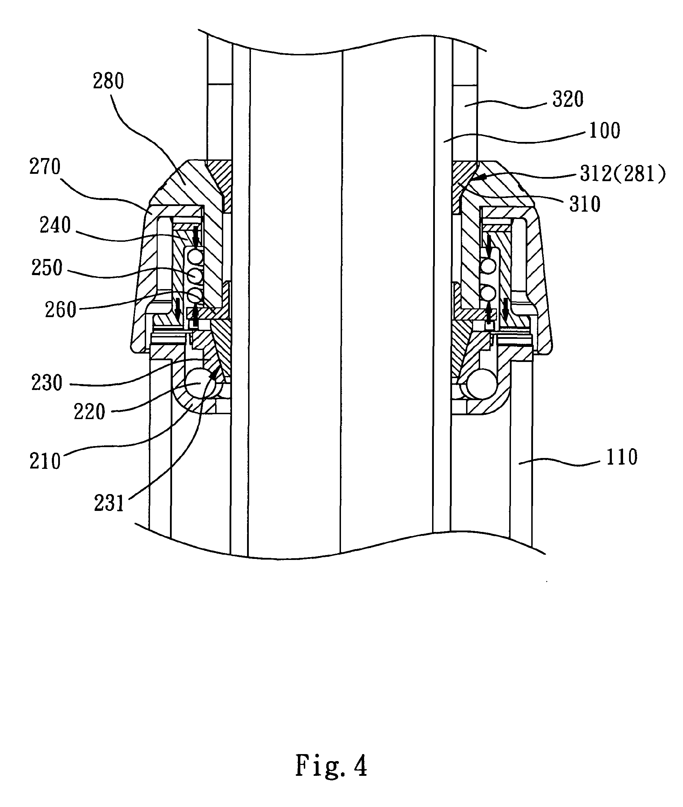

Refer to Fig. 1 - 4. Fig. 1 is an exploded diagram of one embodiment of the disclosure, depicting the bicycle handlebar lock device. Fig. 2 is a cutaway view of Fig. 1. Fig. 3 is a part cutaway view of Fig. 1, depicting the unlock status. And Fig. 4 is a part cutaway view of Fig. 1, depicting the lock status.

The handlebar lock device includes a restrain cam set 200 and a cone-shape expanding set 300. The handlebar lock device is installed between an aheadset stem 100 and a head tube 110 of a bicycle. The bicycle has a set of pressing members 120. The pressing members 120 include a cover 121 mounted on the top of the aheadset stem 100, a leaf 122 arranged inside the aheadset stem 100, and a bolt 123 passed through the cover 121 and the leaf 122.

The bolt 123 presses and connects the handlebar stem 130 to the bowl of the frame body, and thus to maintain the steadiness of the aheadset stem 100 when the aheadset stem 100 is coaxially rotated inside the head tube 110 of the frame body. The detail structure of the handlebar lock device is described as following:

The restrain cam set 200 includes many ring shape members so that the aheadset stem 100 is passed through. The restrain cam set 200 is cooperated with the headset 210. In detail, the restrain cam set 200 includes a slide piece 240, an elasticity member 250 such as a spring, a supporting ring 260, a knob 270 and a shell 280.

The headset 210 includes many balls 220 and a ball track 230. The headset 210 is fixed at the opening of the head tube110, and the head set 210 has a ball track 230 to position the balls 220. The first teeth 211 are located at the top of the headset 210. The ball track 230 has a third cone surface 231 located at the inner side of itself, and a packing ring 232 is arranged inside the third cone surface 231 to female joint the aheadset stem 100.

The slide piece 240, the elasticity member 250, the supporting ring 260 and the knob 270 are positioned between the shell 280 and the headset 210. The top edge of the shell 280 has a second cone surface 281, and the lower lateral side of the shell 280 has a positioning part 282. The upper lateral edge of the shell 280 has several first marks 283.

The upper inner edge of the slide piece 240 has a plate surface 241, the plate surface 241 is contacted and limited by the positioning part 282 of the shell 280, and thus can only be moved along the axial direction. The upper edge of the slide piece 240 has a cam surface 242 that forms a lumpy loop, and the cam surface 242 has several second slide parts 244. The down edge of the slide piece 240 has many second teeth 243 that correspond to the first teeth 211 of the headset 210.

The top end of the elasticity member 250 presses the slide piece 240. The supporting ring 260 supports the lower edge of the slide piece 240, and being pressed by the bottom end of the elasticity member 250. The supporting ring 260 presses down the packing ring 232.

The knob 270 is positioned and pivot mounted below the shell 280, and the knob 270 is rotatable. The knob 270 has lumpy shape cam part 271 that corresponds to the cam surface 242 of the slide piece 240.

When the knob 270 is rotated, the first slide part 272 of the cam part 271 enables the slide piece 240 to move along the axial direction via the elastic force of the elasticity member 250. And then, the second teeth 243 located at the bottom edge of the slide piece 240 engages the first teeth 211 located at the headset 210, and thus the slide piece 240 connects the headset 210. Additionally, the outer surface of the knob 270 has some second marks 273 that correspond to the first marks 283 of the shell 280.

The knob 270 is limited and pivot mounted below the shell 280, and the knob 270 can be shift rotated. The knob 270 has cam part 271 located at the inner side corresponding to the cam surface 242 of the slide piece 240.

The cone-shape expanding set 300 includes a restrain ring 310 and several handlebar rings 320. The restrain ring 310 is located between the shell 280 and the aheadset stem 100, and the restrain ring 310 is limited and can only be moved between the headset stem 130 and the handlebar ring 320.

The restrain ring 310 has a torsion spring opening 311 axially located at the surface of itself, and the first cone surface 312 located at the restrain ring 310 contacts and presses the second cone surface 281 located at the shell 280. The restrain ring 310 together with the friction force trigger the slide piece 240 to perform a slide wedge movement, and thus the torsion spring opening 311 is narrowed or widen thereby, and the aheadset stem 100 is also pressed or released by the restrain ring 310 thereby.

One terminal of the handlebar ring 320 contacts and presses the handlebar stem 130, and the other terminal of the handlebar ring 320 contacts and presses the top end of the restrain ring 310. Therefore, the restrain ring 310 is pressed down by the handlebar ring 320, and thus generates a preset static friction force toward the aheadset stem 100.

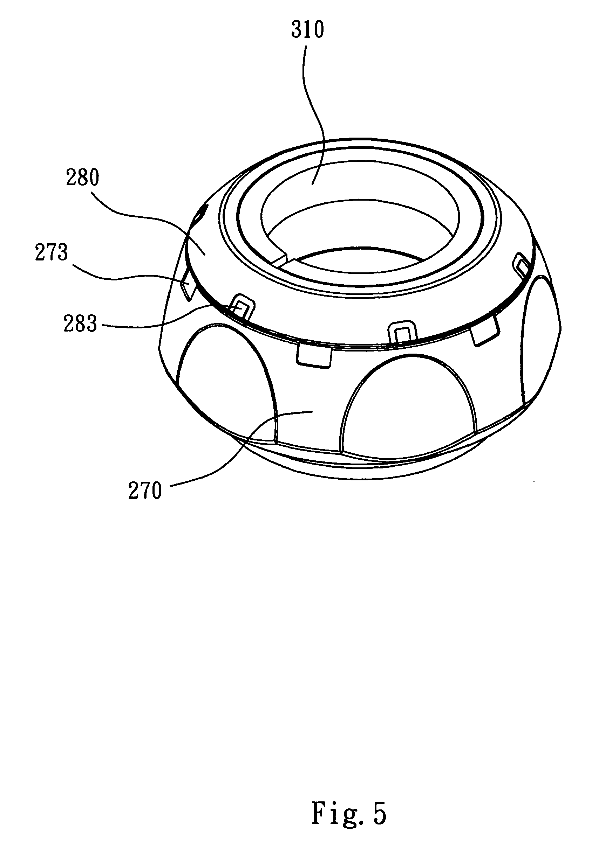

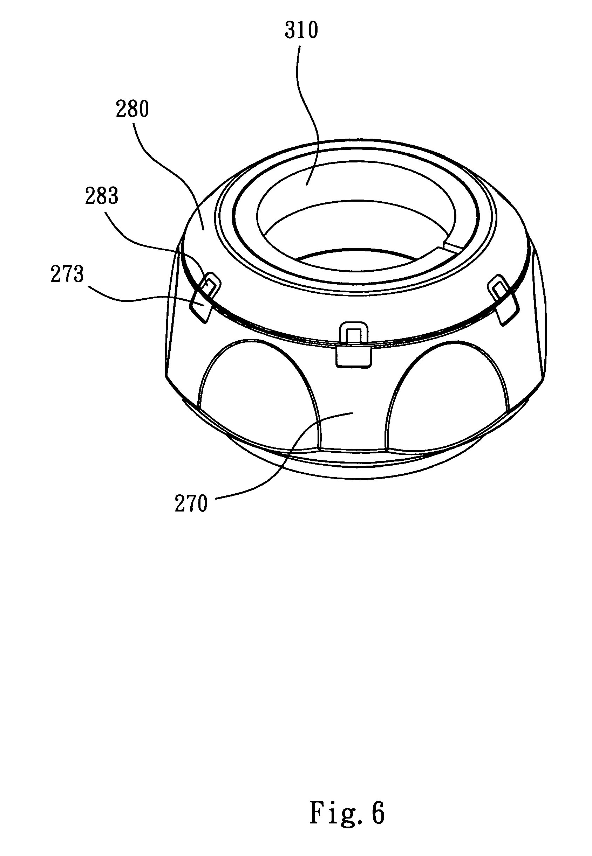

Refer to Fig. 5 and Fig. 6. Fig. 5 is a schematic view of the bicycle handlebar lock device of Fig. 1, depicting the unlock status. Fig. 6 is a schematic view of the bicycle handlebar lock device of Fig. 1, depicting the lock status.

The restrain cam set 200 of the bicycle handlebar lock device of the embodiment is pivot mounted on the head tube 110. The cone-shape expanding set 300 female joints the aheadset stem 100, and located between the restrain cam set 200 and the aheadset stem 100.

The knob 270 of the restrain cam set 200 being limited and pivot mounted below the shell 280 is rotatable, and the rotation of the knob 270 makes the slide piece 240 to move axially via the first slide part 272 of the cam part 271 and the elastic force of the elasticity member 270.

In detail, the second teeth 243 located at the bottom edge of the slide piece 240 are engaged with the first teeth 211 located at the top of the head set 210, and therefore the restrain cam set 200 connects the cone-shape expanding set 300, and thus the aheadset stem 100 is locked and positioned by the friction force of the restrain ring 310. As described above, the aheadset stem 100 is locked to prevent from fall down when it is parked.

Similarly, once the user rotates the knob 270, the first slide part 272 of the cam part 271 makes the slide piece 240 to move based on the elastic force of the elasticity member 250. Therefore, the second teeth 243 of the slide piece 240 are departed from the first teeth 211 of the headset 210, and thus the aheadset stem is unlocked.

Meanwhile, although the restrain ring 310 still provides friction force to the aheadset stem 100, the restrain cam set 200 does not limit the cone-shape expanding set 300, and the cone-shape expanding set 300 can be rotated together with the aheadset stem 100. Therefore, the embodiment enables the user to operate the bicycle normally while the bicycle handlebar lock device is unlocked.

Furthermore, the restrain ring 310 has a torsion spring opening 311 so that the cone-shape expanding set 300 can be extended by the slide edge movement. Wherein, the slide edge movement is triggered by the rotate force and the friction force. The rotate force is provided though the aheadset stem 100 by the user, and the friction force is generated between the aheadset stem 100 and the cone-shape expanding set 300. Therefore, the aheadset stem 100 can be coaxially rotated inside the head tube 110 against the preset static friction force.

Therefore, if the user forgets to rotate the knob 270 to unlock the device after it has been locked, and the restrain ring 310 of the cone-shape expanding set 300 still restrains the aheadset stem 100, the user can still provide a torque force to the aheadset stem 100 to make it coaxially rotate inside the head tube 110 against the preset static friction force. Therefore, the device of the embodiment prevents the user from falling down.

According to another embodiment of the disclosure, a bicycle handlebar lock method is disclosed. The method is able to release the aheadset stem while a rotating force that larger than a preset static friction force is applied to rotate the aheadset stem. The method includes steps as following:
First, arranging the bicycle handlebar lock device between the aheadset stem and the head tube, and pressing the aheadset stem by a preset static friction force. Second, applying a rotating force to the aheadset stem. Third, releasing the aheadset stem by the applied rotating force, and thus enabling the aheadset stem to rotate relative to the head tube.

In the steps described above, the embodiment uses the slide wedge movement to generate the pressing force. The embodiment uses the engagement of the restrain cam set and the headset to lock the aheadset stem. The restrain cam set, the headset and the cone-shape expanding set enables the user to provide a rotating force to unlock the aheadset stem and thus prevent user from falling down.

As described above, the disclosure includes at least the following advantages:
First, the bicycle handlebar lock device and method locks the aheadset stem and thus prevents the bicycle from falling down while being parked.
Second, the bicycle handlebar lock device and method prevents the user from falling down even if the user forgets to unlock the device.

## Claims

1. A bicycle handlebar lock device comprising:
a cone-shaped expanding set (300);
a restrain cam set (200); and
a headset (210) mounted at a head tube (110) for supporting the cone-shape expanding set (300) and the restrain cam set (200);
wherein, the restrain cam set (200) is rotatable to engage the headset for locking the aheadset stem by a preset static friction force,
**characterized in that** the cone-shape expanding set (300) is configured to surround an aheadset stem (100) and the restrain cam set (200) is configured to surround the cone-shape expanding set (300) and to contract the cone-shape expanding set (300) for locking the aheadset stem (100) by the preset static friction force by rotating the restrain cam set (200).

2. The bicycle handlebar lock device of claim 1, **characterized by** further comprising a plurality of balls (220) and a ball track (230) embedded in the headset (210).

3. The bicycle handlebar lock device of claim 1, **characterized in that** wherein the restrain cam set (200) comprises:
a slide piece (240) being movable along the axial direction of the head tube (110), the slide piece (240) having a first cam set;
an elasticity member (250) being applied to uplift the slide piece (240);
a supporting ring (260) being applied to support the elasticity member (250);
a knob (270) being rotate and surrounding the head tube (110) and covering the slide piece (240), the knob (270) having a second cam set corresponding to the first cam set; and
a shell (280) mounted on the knob (270).

4. The bicycle handlebar lock device of claim 3, **characterized in that** wherein the elasticity member (250) is a spring.

5. The bicycle handlebar lock device of claim 3, **characterized in that** wherein the cone-shape expanding set (300) further comprises a restrain ring (310) located between the upper shell and the aheadset stem (100) for locking the aheadset stem (100).

6. The bicycle handlebar lock device of claim 5, **characterized in that** wherein the restrain ring (310) further comprises:
a torsion spring opening (311); and
a first cone surface (312) for contacting and supporting a second cone surface (281) of the shell (280).

7. The bicycle handlebar lock device of claim 5, **characterized by** further comprising:
at least one handlebar ring (320), one side of the handlebar ring (320) contacting the handlebar stem (130), and the other side of the handlebar ring (320) contacting the restrain ring (310).

8. The bicycle handlebar lock device of claim 3, **characterized in that** wherein the shell (280) has several first marks, and the knob (270) has several second marks corresponding to the first marks.

9. A bicycle handlebar lock device of claim 1, which is installed between the aheadset stem (100) and the head tube (110), **characterized in that**:
the cone-shape expanding set (300) joints the aheadset stem (100);
the headset (210) is static installed at the top of the head tube (110), the headset (210) having a lower teeth; and
the restrain cam set (200) is located between the cone-shape expanding set (300) and the headset (210), the restrain cam set (200) having an upper teeth corresponding to the lower teeth, and the restrain cam set (200) partly covering the cone-shape expanding set (300);
wherein, the restrain cam set (200) can be rotated to engage the headset (210) via the upper teeth and the lower teeth, and therefore to press the cone-shape expanding set (300) to lock the aheadset stem (100) by a preset static friction force, the restrain cam set (200) also can be rotated to depart the upper teeth from the lower teeth, and therefore to eliminate the preset static friction force to unlock the aheadset stem (100).

10. The bicycle handlebar lock device of claim 9, **characterized in that**
wherein
the headset (210) further comprises a plurality of balls (220) and a ball track (230); and
the restrain cam set (200) further comprises a slide piece (240), a elasticity member (250), a supporting ring (260), a knob (270) and a shell (280);
wherein the slide piece (240), the elasticity member (250), the supporting ring (260) and the knob (270) are embedded between the headset (210) and the shell (280), the slide piece is movable along the axial direction of the head tube, the knob (270) can be rotated, two sets of cam parts are alternatively located on the knob (270) and the slide piece (240) correspondingly, the rotating level shift between the knob and the slide piece (240) via the slide parts of the cam parts makes the slide piece (240) to move along the axial direction of the head tube (110) by using the elastic force of the elasticity member (250), and the upper teeth are arranged under the slide piece (240).

11. The bicycle handlebar lock device of claim 10, **characterized in that** wherein the cone-shape expanding set (300) further comprises a restrain ring (310), the restrain ring (310) is located between the upper shell and the aheadset stem (100), the restrain ring (310) has a torsion spring opening (311), and the restrain ring (310) has one cone surface to contact and support another cone surface of the shell (280), these two cone surfaces are contacted to each other, and can be driven to move relatively to push the restrain ring (310) to lock the aheadset stem (100).

12. The bicycle handlebar lock device of claim 11, **characterized by** further comprising:
at least one handlebar ring (320), one side of the handlebar ring (320) contacting the handlebar stem (130), and the other side of the handlebar ring (320) contacting the restrain ring (310), the restrain ring (310) being able to lock the aheadset stem (100) by the preset static friction force when the restrain ring (310) is pressed down via the handlebar ring (320).

13. The bicycle handlebar lock device of claim 10, **characterized in that** wherein the elasticity member (250) is a spring.

14. A bicycle handlebar lock method comprising:
installing a bicycle handlebar lock device according to one of the preceding claims between an aheadset stem (100) and a head tube (110), and locking the aheadset stem (100) by a preset static fraction force;
applying a torque force to the aheadset stem (100); and
using the torque force to overcome the preset static fraction force, and therefore unlocking the aheadset stem (100).

15. The bicycle handlebar lock method of claim 14, **characterized by** further comprising:
locking the aheadset stem (100) by the preset static fraction force via the restrain cam set (200) and the cone-shape expanding set (300) of the bicycle handlebar lock device;
applying the torque force to the aheadset stem (100) via the handlebar stem (130); and
using the torque force to overcome the preset static fraction force, and further releasing the cone-shape expanding set (300) to eliminate the preset static fraction force.

## Patentansprüche

1. Fahrradlenkerverriegelungsvorrichtung, die umfasst:
einen kegelförmigen Spreizungsbauteilsatz (300),
einen Rückhaltenockensatz (200) und
einen Lenkkopf (210), der an einem Kopfrohr (110) zur Lagerung des kegelförmigen Spreizungsbauteilsatzes (300) und des Rückhaltenockensatzes (200) angebracht ist,
wobei der Rückhaltenockensatz (200) drehbar ist, um in den Lenkkopf zum Sperren des Lenkkopfschaftes mit einer voreingestellten statischen Reibungskraft einzugreifen,
**dadurch gekennzeichnet**, das der kegelförmige Spreizungsbauteilsatz (300) ausgelegt ist, einen Lenkkopfschaft (100) zu umgeben, und dass der Rückhaltenockensatz (200) ausgelegt ist, den kegelförmigen Spreizungsbauteilsatz (300) zu umgeben und den kegelförmigen Spreizungsbauteilsatz (300) durch Drehen des Rückhaltenockensatzes (200) zum Sperren des Lenkkopfschaftes (100) durch die voreingestellte statische Reibungskraft zusammenzuziehen.

2. Fahrradlenkerverriegelungsvorrichtung nach Anspruch 1, **dadurch gekennzeichnet, dass** sie ferner eine Vielzahl Kugeln (220) und eine Kugelbahn (230) umfasst, die in den Lenkkopf (210) eingebettet sind.

3. Fahrradlenkerverriegelungsvorrichtung nach Anspruch 1, **dadurch gekennzeichnet, dass** der Rückhaltenockensatz (200) umfasst:
ein Gleitstück (240), das beweglich entlang der axialen Richtung des Kopfrohrs (110) ist, wobei das Gleitstück (240) einen ersten Nockensatz umfasst,
ein elastisches Element (250), das verwendet wird, um das Gleitstück (240) anzuheben,
einen Unterstützungsring (260), der verwendet wird, um das elastische Element (250) zu lagern,
einen Drehknopf (270), der sich um den Lenkkopf (110) herum dreht und diesen umgibt und der das Gleitstück (240) abdeckt, wobei der Drehknopf (270) einen zweiten Nockensatz umfasst, der zu dem ersten Nockensatz passt, und
eine Hülse (280), die auf dem Drehknopf (270) angebracht ist.

4. Fahrradlenkerverriegelungsvorrichtung nach Anspruch 3, **dadurch gekennzeichnet, dass** das elastische Element (250) eine Feder ist.

5. Fahrradlenkerverriegelungsvorrichtung nach Anspruch 3, **dadurch gekennzeichnet, dass** der kegelförmige Spreizungsbauteilsatz (300) ferner einen Beschränkungsring (310) umfasst, der zwischen dem oberen Bereich der Hülse und dem Lenkkopfschaft (100) zum Sperren des Lenkkopfschaftes (100) angeordnet ist.

6. Fahrradlenkerverriegelungsvorrichtung nach Anspruch 5, **dadurch gekennzeichnet, dass** der Beschränkungsring (310) ferner umfasst:
eine Torsionsfederöffnung (311) und
eine erste kegelförmige Oberfläche (312) zum Kontaktieren und Lagern einer zweiten kegelförmigen Oberfläche (281) der Hülse (280).

7. Fahrradlenkerverriegelungsvorrichtung nach Anspruch 5, **dadurch gekennzeichnet, dass** sie ferner umfasst:
mindestens einen Lenkerring (320), wobei eine Seite des Lenkerrings (320) den Lenkerschaft (130) berührt und wobei die andere Seite des Lenkerrings (320) den Beschränkungsring (310) berührt.

8. Fahrradlenkerverriegelungsvorrichtung nach Anspruch 3, **dadurch gekennzeichnet, dass** die Hülse (280) mehrere erste Markierungen umfasst und dass der Drehknopf (270) mehrere zweite Markierungen umfasst, die den ersten Markierungen entsprechen.

9. Fahrradlenkerverriegelungsvorrichtung nach Anspruch 1, die zwischen dem Lenkkopfschaft (100) und dem Lenkkopf (110) installiert ist, **dadurch gekennzeichnet, dass**:
der kegelförmige Spreizungsbauteilsatz (300) mit dem Lenkkopfschaft zusammengefügt ist,
der Lenkkopf (210) statisch an der Oberseite des Kopfrohrs (110) installiert ist, wobei der Lenkkopf untere Zähne umfasst, und
der Rückhaltenockensatz (200) zwischen dem kegelförmigen Spreizungsbauteilsatz (300) und dem Lenkkopf (210) angeordnet ist, wobei der Rückhaltenockensatz (200) obere Zähne umfasst, die zu den unteren Zähnen passen, und wobei der Rückhaltenockensatz (200) teilweise den kegelförmigen Spreizungsbauteilsatz (300) bedeckt,
wobei der Rückhaltenockensatz (200) gedreht werden kann, um mit dem Lenkkopf (210) über die oberen Zähne und die unteren Zähne in Eingriff zu kommen und dadurch den kegelförmigen Spreizungsbauteilsatz (300) zu drücken, um den Lenkkopfschaft (100) durch eine voreingestellte statische Reibungskraft zu sperren, wobei der Rückhaltenockensatz (200) auch gedreht werden kann, um die oberen Zähne von den unteren Zähnen zu trennen und dadurch die voreingestellte statische Reibungskraft zu beseitigen, um den Lenkkopfschaft (100) zu entsperren.

10. Fahrradlenkerverriegelungsvorrichtung nach Anspruch 9, **dadurch gekennzeichnet, dass**:
der Lenkkopf (210) ferner eine Vielzahl Kugeln (220) und eine Kugelbahn (230) umfasst und
der Rückhaltenockensatz (200) ferner ein Gleitstück (240), ein elastisches Element (250), einen Unterstützungsring (260), einen Drehknopf (270) und eine Hülse (280) umfasst,
wobei das Gleitstück (240), das elastische Element (250), der Unterstützungsring (260) und der Drehknopf (270) zwischen dem Lenkkopf (210) und der Hülse (280) eingebettet sind, wobei das Gleitstück beweglich entlang der axialen Richtung des Lenkkopfes ist, wobei der Drehknopf (270) gedreht werden kann, wobei zwei Sätze Nockenteile entsprechend alternativ an dem Drehknopf (270) und dem Gleitstück (240) angeordnet sind, wobei die drehbedingte Niveauverschiebung zwischen dem Drehknopf und dem Gleitstück (240) durch die Gleitteile der Nockenteile bewirkt, dass sich das Gleitstück (240) durch die elastische Kraft des elastischen Elements (250) entlang der axialen Richtung des Lenkkopfes (110) bewegt, und wobei die oberen Zähne unter den Gleitstück (240) angeordnet sind.

11. Fahrradlenkerverriegelungsvorrichtung nach Anspruch 10, **dadurch gekennzeichnet, dass** der kegelförmige Spreizungsbauteilsatz (300) ferner einen Beschränkungsring (310) umfasst, wobei der Beschränkungsring (310) zwischen der oberen Hülse und dem Lenkkopfschaft (100) angeordnet ist, wobei der Beschränkungsring (310) eine Torsionsfederöffnung (311) umfasst und wobei der Beschränkungsring (310) eine kegelförmige Oberfläche zum Kontaktieren und Stützen einer weiteren kegelförmigen Oberfläche auf der Hülse (82) umfasst, wobei diese zwei kegelförmigen Oberflächen miteinander in Kontakt stehen und angetrieben werden können, sich relativ zu bewegen, um den Beschränkungsring (310) zu schieben, um den Lenkkopfschaft (100) zu sperren.

12. Fahrradlenkerverriegelungsvorrichtung nach Anspruch 11, **dadurch gekennzeichnet, dass** sie ferner umfasst:
mindestens einen Lenkerring (320), wobei eine Seite des Lenkerrings (320) den Lenkerschaft (130) berührt und wobei die andere Seite des Lenkerrings (320) den Beschränkungsring (310) berührt, wobei der Beschränkungsring (310) in der Lage ist, den Lenkkopfschaft (100) durch die voreingestellte statische Reibungskraft zu sperren, wenn der Beschränkungsring (310) durch den Lenkerring (320) nach unten gedrückt wird.

13. Fahrradlenkerverriegelungsvorrichtung nach Anspruch 10, **dadurch gekennzeichnet, dass** das elastische Element (250) eine Feder ist.

14. Fahrradlenkerverriegelungsverfahren, das umfasst:
Installieren einer Fahrradlenkerverriegelungsvorrichtung nach einem der vorhergehenden Ansprüche zwischen einem Lenkkopfschaft (100) und einem Kopfrohr (110) und Sperren des Lenkkopfschaftes (100) mit einer voreingestellten statischen Reibungskraft,
Ausüben einer Drehmomentkraft auf den Lenkkopfschaft (100) und
Verwenden der Drehmomentkraft, um die voreingestellte statische Reibungskraft zu überwinden und dadurch den Lenkkopfschaft (100) zu entsperren.

15. Fahrradlenkerverriegelungsverfahren nach Anspruch 14, **dadurch gekennzeichnet, dass** es ferner umfasst:
Sperren des Lenkkopfschaftes (100) mit der voreingestellten statischen Reibungskraft durch den Rückhaltenockensatz (200) und den kegelförmigen Spreizungsbauteilsatz (300) der Fahrradlenkerverriegelungsvorrichtung,
Ausüben der Drehmomentkraft durch den Lenkerschaft (130) auf den Lenkkopfschaft (100) und
Verwenden der Drehmomentkraft, um die voreingestellte statische Reibungskraft zu überwinden und ferner den kegelförmigen Spreizungsbauteilsatz (300) zu lösen, um die voreingestellte statische Reibungskraft zu beseitigen.

## Revendications

1. Dispositif de blocage de guidon de bicyclette comprenant :
un jeu d'expansion en forme de cône (300),
un jeu de came de retenue (200) et
un jeu de direction (210) monté sur un tube de direction (110) pour supporter le jeu d'expansion en forme de cône (300) et le jeu de came de retenue (200),
dans lequel le jeu de came de retenue (200) est rotatif pour se mettre en prise avec le jeu de direction pour bloquer la potence aheadset par une force de friction statique préréglée,
**caractérisé en ce que** le jeu d'expansion en forme de cône (300) est configuré pour entourer une potence aheadset (100) et le jeu de came de retenue (200) est configuré pour entourer le jeu d'expansion en forme de cône (300) et pour contracter le jeu d'expansion en forme de cône (300) pour bloquer la potence aheadset (100) par la force de friction statique préréglée en faisant tourner le jeu de came de retenue (200).

2. Dispositif de blocage de guidon de bicyclette selon la revendication 1, **caractérisé par** le fait de comprendre en plus une pluralité de billes (220) et une gorge à billes (230) encastrée dans le jeu de direction (210).

3. Dispositif de blocage de guidon de bicyclette selon la revendication 1, **caractérisé en ce que** le jeu de came de retenue (200) comprend :
une pièce de glissement (240) qui est mobile le long du sens axial du tube de direction (110), la pièce de glissement (240) ayant un premier jeu de came,
un élément élastique (250) qui est appliqué pour soulever la pièce de glissement (240),
une bague de support (260) qui est appliquée pour supporter l'élément élastique (250),
un bouton (270) qui est rotatif et qui entoure le tube de direction (110) et qui couvre la pièce de glissement (240), le bouton (270) ayant un second jeu de came correspondant au premier jeu de came et
une coque (280) montée sur le bouton (270).

4. Dispositif de blocage de guidon de bicyclette selon la revendication 3, **caractérisé en ce que** l'élément élastique (250) est un ressort.

5. Dispositif de blocage de guidon de bicyclette selon la revendication 3, **caractérisé en ce que** le jeu d'expansion en forme de cône (300) comprend de plus un anneau de retenue (310) situé entre la coque supérieure et la potence aheadset (100) pour bloquer la potence aheadset (100).

6. Dispositif de blocage de guidon de bicyclette selon la revendication 5, **caractérisé en ce que** l'anneau de retenue (310) comprend de plus :
une ouverture à ressort de torsion (311) et
une première surface de cône (312) pour contacter et supporter une seconde surface de cône (281) de la coque (280).

7. Dispositif de blocage de guidon de bicyclette selon la revendication 5, **caractérisé par** le fait de comprendre en plus :
au moins une bague de guidon (320), un côté de la bague de guidon (320) ayant contact avec la potence de guidon (130) et l'autre côté de la bague de guidon (320) ayant contact avec l'anneau de retenue (310).

8. Dispositif de blocage de guidon de bicyclette selon la revendication 3, **caractérisé en ce que** la coque (280) a plusieurs premières marques et le bouton (270) a plusieurs secondes marques correspondant aux premières marques.

9. Dispositif de blocage de guidon de bicyclette selon la revendication 1 qui est installé entre la potence aheadset (100) et le tube de direction (110), **caractérisé en ce que**
le jeu d'expansion en forme de cône (300) est assemblé sur la potence aheadset (100),
le jeu de direction (210) est installé statiquement sur le dessus du tube de direction (110), le jeu de direction (210) ayant des dents inférieures et
le jeu de came de retenue (200) est situé entre le jeu d'expansion en forme de cône (300) et le jeu de direction (210), le jeu de came de retenue (200) ayant des dents supérieures correspondant aux dents inférieures et le jeu de came de retenue (200) couvrant partiellement le jeu d'expansion en forme de cône (300), le jeu de came de retenue (200) pouvant tourner pour se mettre en prise avec le jeu de direction (210) par l'intermédiaire des dents supérieures et des dents inférieures et pour donc presser le jeu d'expansion en forme de cône (300) pour bloquer la potence aheadset (100) par une force de friction statique préréglée, le jeu de came de retenue (200) pouvant aussi être tourné pour faire quitter les dents supérieures des dents inférieures et pour donc éliminer la force de friction statique préréglée pour débloquer la potence aheadset (100).

10. Dispositif de blocage de guidon de bicyclette selon la revendication 9, **caractérisé en ce que**
le jeu de direction (210) comprend de plus une pluralité de billes (220) et une gorge de billes (230) et
le jeu de came de retenue (200) comprend de plus une pièce de glissement (240), un élément élastique (250), une bague de support (260), un bouton (270) et une coque (280),
la pièce de glissement (240), l'élément élastique (250), la bague de support (260) et le bouton (270) étant encastrés entre le jeu de direction (210) et la coque (280), la pièce de glissement étant mobile le long du sens axial du tube de direction, le bouton (270) pouvant être tourné, deux jeux de parties de came étant situés en alternance sur le bouton (270) et la pièce de glissement (240) de manière correspondante, le décalage de niveau de rotation entre le bouton et la pièce de glissement (240) par l'intermédiaire des parties de glissement des parties de came faisant se déplacer la pièce de glissement (240) le long du sens axial du tube de direction (110) en utilisant la force élastique de l'élément élastique (250) et les dents supérieures étant arrangées sous la pièce de glissement (240).

11. Dispositif de blocage de guidon de bicyclette selon la revendication 10, **caractérisé en ce que** le jeu d'expansion en forme de cône (300) comprend de plus un anneau de retenue (310), l'anneau de retenue (310) est situé entre la coque supérieure et la potence aheadset (100), l'anneau de retenue (310) a une ouverture à ressort de torsion (311) et l'anneau de retenue (310) a une surface de cône pour être en contact avec et supporter une autre surface de cône de la coque (280), ces deux surfaces de cône sont en contact l'une avec l'autre et peuvent être entraînées pour se déplacer de manière relative pour pousser l'anneau de retenue (310) à bloquer la potence aheadset (100).

12. Dispositif de blocage de guidon de bicyclette selon la revendication 11, **caractérisé par** le fait de comprendre en plus :
au moins une bague de guidon (320), un côté de la bague de guidon (320) ayant contact avec la potence de guidon (130) et l'autre côté de la bague de guidon (320) ayant contact avec l'anneau de retenue (310), l'anneau de retenue (310) étant capable de bloquer la potence aheadset (100) par la force de friction statique préréglée lorsque l'anneau de retenue (310) est pressé vers le bas par l'intermédiaire de la bague de guidon (320).

13. Dispositif de blocage de guidon de bicyclette selon la revendication 10, **caractérisé en ce que** l'élément élastique (250) est un ressort.

14. Procédé de blocage de guidon de bicyclette comprenant :
l'installation d'un dispositif de blocage de guidon de bicyclette selon l'une des revendications précédentes entre une potence aheadset (100) et un tube de direction (110) et le blocage de la potence aheadset (100) par une force de friction statique préréglée,
l'application d'une force de torsion à la potence aheadset (100) et
l'utilisation de la force de torsion pour surmonter la force de friction statique préréglée et donc pour débloquer la potence aheadset (100).

15. Procédé de blocage de guidon de bicyclette selon la revendication 14, **caractérisé par** le fait de comprendre en plus :
le blocage de la potence aheadset (100) par la force de friction statique préréglée par l'intermédiaire du jeu de came de retenue (200) et du jeu d'expansion en forme de cône (300) du dispositif de blocage de guidon de bicyclette,
l'application de la force de torsion à la potence aheadset (100) par l'intermédiaire de la potence de guidon (130) et
l'utilisation de la force de torsion pour surmonter la force de friction statique préréglée et de plus le déblocage du jeu d'expansion en forme de cône (300) pour éliminer la force de friction statique préréglée.
